Europäisches Patentamt

European Patent Office

Office européen des brevets

(11) Veröffentlichungsnummer: **0 311 909 B1**

(12) **EUROPÄISCHE PATENTSCHRIFT**

(45) Veröffentlichungstag der Patentschrift: **26.07.95**

(21) Anmeldenummer: **88116555.9**

(22) Anmeldetag: **06.10.88**

(51) Int. Cl.6: **C08K 5/00**, C08L 25/02, C08L 51/04, //(C08K5/00,5:34, 5:51),(C08L25/02,71:12), (C08L51/04,71:12)

(54) **Selbstverlöschende, halogenfreie thermoplastische Formmasse, Verfahren zu deren Herstellung und ihre Verwendung.**

(30) Priorität: **15.10.87 DE 3734907**

(43) Veröffentlichungstag der Anmeldung:
**19.04.89 Patentblatt 89/16**

(45) Bekanntmachung des Hinweises auf die
Patenterteilung:
**26.07.95 Patentblatt 95/30**

(84) Benannte Vertragsstaaten:
**BE DE FR GB NL**

(56) Entgegenhaltungen:
**EP-A- 0 192 214**
**DE-A- 3 228 863**
**DE-A- 3 234 033**

**DATABASE WPI, Nr. 77-34991Y, Derwent Publications Ltd., London, GB; & JP-A-52 041 667**

(73) Patentinhaber: **BASF Aktiengesellschaft**
**Carl-Bosch-Strasse 38**
**D-67063 Ludwigshafen (DE)**

(72) Erfinder: **Feldmann, Heike, Dr.**
**S 6,29-31**
**D-6800 Mannheim 1 (DE)**
Erfinder: **Vestner, Siegfried, Dr.**
**Sudermannstrasse 4**
**D-6700 Ludwigshafen (DE)**
Erfinder: **Mitulla, Konrad, Dr.**
**Schwalbenweg 31**
**D-6700 Ludwigshafen (DE)**
Erfinder: **Echte, Adolf, Dr.**
**Leuschnerstrasse 42**
**D-6700 Ludwigshafen (DE)**
Erfinder: **Ostermayer, Bertram, Dr.**
**Pfaffenpfad 14**
**D-6701 Roedersheim-Gronau (DE)**

EP 0 311 909 B1

**Beschreibung**

Die Erfindung betrifft eine selbstverlöschende, halogenfreie thermoplastische Formmasse, enthaltend, bezogen auf A + B,

A 40 bis 80 Gew.% mindestens eines gegebenenfalls schlagfesten Polymerisates, aufgebaut aus mindestens einem vinylaromatischen Monomeren mit 8 bis 12 C-Atomen
B 60 bis 20 Gew.% mindestens eines Polyphenylenethers, die zusätzlich
C ein Flammschutzmittelsystem auf Basis von 2 unterschiedlichen flammschutzmitteln enthält.

Aufgrund der korrosiv wirkenden Verbrennungsgase bei Einsatz von halogenhaltigen Substanzen sind halogenfreie selbstverlöschende Formmassen erstrebenswert. Es ist bekannt, daß thermoplastische Formmassen, bestehend aus Styrolpolymerisaten und Polyphenylenethern, unter Verwendung von organischen Phosphorverbindungen flammfest ausgerüstet werden können. So wird z.B. in der DE-OS 2 546 621 die Verwendung von Triarylphosphaten, wie Triphenylphosphat, beschrieben. Die US-PS 4 278 588 beschreibt den Einsatz von Phosphinoxiden, wie Triphenylphosphinoxid, für die Flammfestmachung von Polymermischungen aus Polyphenylenethern und Styrolpolymerisaten. Die US-PS 4 255 324 hat Mischungen von Phosphinoxiden und Phosphonaten, insbesondere cyclische Phosphonate, für diesen Zweck zum Gegenstand. In der JP-OS 52 041 667 ist eine Verbesserung der Flammschutzeigenschaften eines mit Butadien-Styrol-Copolymer modifizierten Polyphenylenethers durch Zusatz von Triazinderivaten beschrieben. Die DE-OS 3 401 835 beinhaltet die halogenfreie Brandschutzausrüstung von thermoplastischen Formmassen auf Basis eines "Dreier-systems", bestehend aus Phenol/Aldehyd-Harz, einer Stickstoff-enthaltenden organischen Verbindung sowie aus einer Phosphor-enthaltenden organischen Verbindung, wobei die Verbindungen bevorzugt im Verhältnis 1:1:1 und vorzugsweise für die Ausrüstung von Polymeren, die in der Matrix schon Stickstoff aufweisen, wie SAN, eingesetzt werden.

Den vorstehend genannten Formmassen ist gemeinsam, daß relativ hohe Mengen an Flammschutzmittel zugesetzt werden müssen, um auch bei hohen Ansprüchen, wie bei dem UL-94-Brandtest der Underwriter Laboratories an 1,6 mm dicken Teststäben einen vollständigen Brandschutz, d.h. V-O-Einstufung, zu bekommen. Darüber hinaus besitzen diese Formmassen eine unbefriedigende Wärmeformbeständigkeit und z.T. ungenügende mechanische Eigenschaften, sowie ein unbefriedigendes Verarbeitungsverhalten, das sich bei der Spritzgußverarbeitung am Formbelag bemerkbar macht.

In der DE-OS 3 234 033 ist eine halogenfreie thermoplastische Formmasse auf der Grundlage von Styrolpolymerisaten und Polyphenylenether beschrieben, die bereits mit geringeren Mengen an Flammschutzmittelmischung, bestehend aus einem Gemisch aus Phosphinoxid und einem Phosphat, in wenigen Sekunden verlöschen, nicht brennend abtropfen und gute mechanische Eigenschaften aufweisen.

Die aus der DE-OS bekannten Formmassen zeigen aber nicht brennendes Abtropfen und verlieren bei Zusatz von üblichen Pigmenten, wie sie zur Einfärbung der Produkte in den üblichen Mengen zugesetzt werden, bei dem UL-94-Brandtest der Underwriter Laboratories an 1,6 mm dicken Teststäben die V-O-Einstufung.

Der vorliegenden Erfindung lag daher die Aufgabe zugrunde, thermoplastische Formmassen auf der Grundlage von Styrolpolymerisaten und Polyphenylenethern zu schaffen, die kein Abtropfen zeigen und auch bei Zusatz von Pigmenten die V-O-Einstufung bei dem UL-94-Brandtest der Underwriter Laboratories an 1,6 mm Teststäben zeigen, weiterhin keine Halogen-Flammschutzmittel enthalten und gute mechanische sowie Verarbeitungseigenschaften aufweisen.

Diese Aufgabe wird erfindungsgemäß durch eine halogenfreie Formmasse gemäß Patentanspruch 1 gelöst, die als Flammschutzmittel eine Mischung aus Phosphor-enthaltenden organischen Verbindungen und Triazinderivaten enthalten.

Die Erfindung betrifft somit eine selbstverlöschende, halogenfreie thermoplastische Formmasse, enthaltend, bezogen auf A + B, aufgebaut aus

A 40 bis 80 Gew.% mindestens eines, gegebenenfalls schlagfest modifizierten Polymerisates, aufgebaut aus einem vinylaromatischen Monomeren mit 8 bis 12 C-Atomen.
B 60 bis 20 Gew.% mindestens eines Polyphenylenethers, enthaltend zusätzlich,
C ein Flammschutzmittelsystem auf Basis von 2 unterschiedlichen Flammschutzmitteln,
dadurch gekennzeichnet, daß bezogen auf 100 Gew.Teile A + B,
5 bis 25 Gew.Teile des Flammschutzmittelsystems angewendet werden und dieses eine Mischung aus
$C_1$ mindestens einer Phosphor enthaltenden organischen Verbindung und
$C_2$ mindestens einem Triazinderivat
im Gewichtsverhältnis $C_1/C_2$ von 20:1 bis 2:1 darstellt.

Die erfindungsgemäßen Formmassen zeichnen sich dadurch aus, daß gegenüber dem Stand der Technik durch Zusatz von Melamin oder Melaminsalzen zu der Phosphor enthaltenden Verbindung, z.B.

2

Triphenylphosphinoxid, d.h. der Verwendung einer Flammschutzmittelmischung, das nichtbrennende Abtropfen verhindert wird und auch die durch Pigmente eingefärbten Formmassen am 1,6 mm Teststäbchen die V-O-Einstufung beim UL-94-Brandtest erreichen, bei guten mechanischen Eigenschaften und gutem Verarbeitungsverhalten der formmassen. Dies war aufgrund des Standes der Technik nicht zu erwarten und deshalb völlig überraschend, da die Einzelkomponenten, wie Triphenylphosphinoxid, in den vorzugsweise eingesetzten Formmassen zum unerwünschten nichtbrennenden Abtropfen führen und Melamin oder Melaminsalze eine Verschlechterung der Mechanik verursachen und alleine eingesetzt keine Flammschutzwirkung besitzen.

Die in DE-OS 3 234 033 beschriebene geringe Menge an Flammschutzzusatz führt zwar zur Erreichung der V-O-Einstufung nach UL-94 am 1,6 mm-Teststäbchen, die Probekörper zeigen aber nichtbrennendes Abtropfen und bei Zusatz von Pigmenten wie Ruß oder Titandioxid wird die Brandschutzklasse V-O nicht mehr erreicht. Durch Erhöhung der Phosphorkonzentration wird die Brandschutzwirkung verbessert, allerdings auch die Abtropfneigung erhöht. Durch Melamin- oder Melaminsalzzusatz konnte dies nun völlig überraschend unterbunden werden. Tabelle 1 macht den Vorteil der erfindungsgemäßen formmassen gegenüber dem Stand der Technik deutlich.

Nachstehend werden der Aufbau der erfindungsgemäßen Formmasse aus den Komponenten, die Komponenten der Formmasse und die Herstellung der Formmasse beschrieben.

Am Aufbau der erfindungsgemäßen Formmasse sind ausschließlich die halogenfreien Komponenten A, B und C ($C_1$ + $C_2$) beteiligt. Vorzugsweise besteht die Formmasse aus diesen Komponenten. Zusätzlich kann die formmasse noch übliche halogenfreie Zusatzstoffe (Komponente D) enthalten.

Die erfindungsgemäße Formmasse enthält, jeweils bezogen auf A + B,

A: 40 bis 80 Gew.%, insbesondere 50 bis 75 Gew.%, vorzugsweise 60 bis 72 Gew.%,

B: 60 bis 20 Gew.%, insbesondere 50 bis 25 Gew.%, vorzugsweise 40 bis 28 Gew.%.

Bezogen auf 100 Gew.Teile A + B enthält die Formmasse

C (= Summe $C_1$ + $C_2$) 5 bis 25 Gew.Teile, vorzugsweise 10 bis 25 Gew.Teile und insbesondere 12 bis 23 Gew.Teile,

wobei das Gewichtsverhältnis $C_1/C_2$ im Bereich von 20:1 bis 2:1, insbesondere im Bereich von 18:1 bis 5:1 liegt.

Zusätzlich kann die Formmasse, bezogen auf A + B, jeweils 0.001 bis 25 Gew.Teile, vorzugsweise 0,001 bis 10 Gew.Teile der Komponente D aufweisen.

Unter der erfindungsgemäßen Formmasse sollen Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Komponente A

Die Komponente A) der erfindungsgemäßen Formmassen soll wenigstens ein an sich bekanntes Polymerisat eines monovinylaromatischen Monomeren mit 8 bis 12 C-Atomen sein. Als monovinylaromatisches Monomere kommt dabei insbesondere Styrol in Betracht, ferner die kern- oder seitenkettenalkylierten Styrole. Vorzugsweise wird aber ausschließlich Styrol verwendet. Bei der Komponente A) handelt es sich vorzugsweise um schlagfest modifiziertes Polystyrol mit Kautschukgehalten von 3 bis 25 Gew.%, das durch Polymerisation von Styrol in Gegenwart eines Kautschuks erhalten wird.

Die meist angewandten Verfahren zur Herstellung schlagzäh modifizierter Styrolpolymerisate sind die Polymerisation in Masse oder Lösung, wie es beispielsweise in der US-PS 2 694 692 beschrieben ist und Verfahren zur Masse-Suspensionspolymerisation, wie sie beispielsweise in der US-PS 2 862 692 beschrieben sind. Selbstverständlich sind auch andere Verfahren anwendbar.

Als Kautschuke werden die üblicherweise für die Schlagzähmodifizierung von Styrolpolymerisaten gebräuchlichen natürlichen oder synthetischen Kautschuke mit Kautschukgehalten von 3 bis 25 Gew.% eingesetzt. Geeignete Kautschuke im Sinne der Erfindung sind außer Naturkautschuk, z.B. Polybutadien, Polyisopren und Mischpolymerisate des Butadiens und/oder Isoprens mit Styrol und anderen Comonomeren, die eine Glastemperatur unter -20°C besitzen. Besonders eignen sich Butadien-Polymerisate mit einem 1,4-cis-Gehalt, der zwischen 25 und 98 % liegt.

Die schlagfesten Polystyrole sind an sich bekannt und größtenteils im Handel erhältlich, wobei die mittleren Teilchengrößen ($d_{50}$-Wert der integralen Masseverteilung) im Bereich von 0,2 bis 7 $\mu$m bei einer VZ der Hartmatrix von 50 bis 100 ml/g (0,5 %ig in Toluol bei 23°C) liegen können.

Komponente B

Als Komponente B) kommen an sich bekannte Polyphenylenether auf der Basis von in ortho-Position disubstituierten Polyphenylenoxiden in Frage, wobei der Ethersauerstoff der einen Einheit an dem Benzolkern der benachbarten Einheit gebunden ist. Dabei sollen mindestens 50 Einheiten miteinander verknüpft sein. Die Polyphenylenether können in ortho-Stellung zum Sauerstoff, Wasserstoff, Kohlenwasserstoffe, die kein $\alpha$-ständiges tertiäres Wasserstoffatom besitzen, Phenylreste und Kohlenwasserstoff-oxi-Reste tragen.

So kommen in Frage:
Poly(2,6-diphenyl-1,4-phenylen)ether, Poly(2,6-dimethoxy-1,4-phenylen)ether, Poly(2,6-dimethyl-1,4-phenylen)ether. Bevorzugt wird der Poly(2,6-dimethyl-1,4-phenylen)ehter eingesetzt. Besonders bevorzugt sind dabei Poly(2,6-dimethyl-1,4-phenylen)ether mit einer Grenzviskosität von 0,40 bis 0,65 dl/g (0,5 %ige Lösung gemessen in Chloroform bei 30 °C).

Die Polyphenylenether können in an sich bekannter Weise z.B. in Gegenwart von komplexbildenden Mitteln wie Kupferbromid und sek. -Dibutylamin aus den Phenolen hergestellt werden.

Komponente C

Das Flammschutzmittelsystem, Komponente C der erfindungsgemäßen Formmasse, besteht aus einem Gemisch einer Phosphor-enthaltenden organischen Verbindung $C_1$ und einem Triazinderivat $C_2$.

Typische Vertreter der Phosphor-enthaltenden organischen Verbindungen $C_1$ sind:
Triphenylphosphinoxid, Tritolylphosphinoxid, Trisnonylphenylphosphinoxid, Tricyclohexylphosphinoxid, Tris-(n-butyl)-phosphinoxid, Tris-(n-hexyl)-phosphinoxid, Tris-(n-octyl)-phosphinoxid, Tri(cyanoethyl)-phosphinoxid, Benzylbis-(cyclohexyl)-phosphinoxid, Benzylbisphenylphosphinoxid, Phenylbis-(n-hexyl)-phosphinoxid, Triphenylphosphate, Phenylbisdodecylphosphat,Phenylbisneopentylphosphat, Phenylethylhydrogenphosphat, Phenyl-bis(3,5,5-trimethylhexylphosphat), Ethyldiphenylphosphat, Bis-(2-ethylhexyl)-p-tolyl-phosphat, Tritolylphosphat, Trixylylphosphat, Trimesitylphosphat, Bis-(2-ethylhexyl)-phenylphosphat, Tris-(nonylphenyl)phosphat, Bis-(dodecyl)-p-(tolyl)-phosphat, Tricresylphosphat. Des weiteren können auch cyclische Phosphate wie z.B. Diphenylpentaerythritol-diphosphat eingesetzt werden.

Bei den Triazinderivaten, $C_2$, handelt es sich bevorzugt um Melamin oder Melaminsalze. Beispiele sind Melamincyanurat, Melaminoxalat, Melaminphosphat, Melaminborat, Melaminstearat.

Besonders bevorzugt ist die Mischung aus Triphenylphosphinoxid und Melamin.

Die Komponente C enthält die Phosphor-enthaltende organische Verbindung, $C_1$, und das Triazinderivat, $C_2$, in einem Gew.-Verhältnis $C_1:C_2$ im Bereich von 20:1 bis 2:1, vorzugsweise im Bereich von 18:1 bis 5:1.

Komponente D

Die erfindungsgemäße Formmasse kann als Komponente D übliche Zusatzstoffe, wie Pigmente, Füllstoffe, Oligo- und Polymere, Antistatika, Antioxidantien und andere Stabilisatoren und Schmiermittel enthalten.

Als Pigmente kommen z.B. in Frage $TiO_2$ und Ruße.

Bei Verwendung von $TiO_2$ liegt die mittlere Teilchengröße im Bereich von 50 - 400 nm, insbesondere 150 - 240 nm. Techn. Verwendung finden Rutile und Anatas, die gegebenenfalls mit Metalloxiden, z.B. Al-oxid, Si-Oxiden, Oxiden des Zn oder Siloxanen beschichtet sind.

Als Ruße sollen mikrokristalline, feinteilige Kohlenstoffe verstanden werden (vgl. Kunststofflexikon, 7. Aufl. 1980).

Als geeignet seien die Ofenruße, Acetylenruße, Gasruße sowie die durch thermische Herstellung erhältlichen Thermalruße genannt.

Die Teilchengrößen liegen vorzugsweise im Bereich von 0,01 bis 0,1 $\mu$m und die Oberflächen im Bereich von $10^2$ bis $10^4$ m$^2$/g (BET/ASTM D 3037) bei DBP-Absorptionen von $10^2$ bis $10^3$ ml/100 g (ASTM d 2414).

Herstellung der erfindinngsgemäßen Formmasse

Man stellt die erfindungsgemäßen thermoplastischen Formmassen wie üblich auf Vorrichtungen, die ein homogenes Mischen zu lassen, wie Knetern, Extrudern oder Walzenmischgeräten bei Temperaturen von 240 bis 300 °C her. Wobei man alle Komponenten A, B, C (= $C_1$ + $C_2$) und gegebenenfalls D auf einmal mischt oder beliebige Teilmischungen herstellt und diese Vormischungen dann weiter mischt.

Die erfindungsgemäße Formmasse läßt sich nach den für die Thermoplastverarbeitung üblichen Verfahen, wie Extrusion und Spritzgießen, zu den verschiedenartigsten Formkörpern, wie zu Gehäusen von Elektrogeräten wie Fernschreibern und Fernsehern verarbeiten.

Die in den Beispielen und Vergleichsversuchen beschriebenen Parameter wurden wie folgt bestimmt:

1. UL 94

Die Flammschutzprüfung erfolgte im vertikalen Brandschutztest an 1,6 mm Teststäbchen nach den Vorschriften der Underwriter Laboraties zwecks Einordnung in eine der Brandklassen UL-94 V-O, UL-94 V-1 oder UL-94 V-2.

Die Einstufung eines flammgeschützten Thermoplasten in die Brandklasse UL-94 V-O erfolgt, wenn folgende Kriterien erfüllt sind:

Bei einem Satz von 5 Proben der Abmessungen 127 x 12,7 x 1,6 mm dürfen alle Proben nach zweimaliger Beflammung von 10 Sek. Zeitdauer mit einer offenen Flamme (Höhe 19 mm) nicht länger als 10 Sek. nachbrennen. Die Summe der Nachbrennzeiten bei 10 Beflammungen von 5 Proben darf nicht größer sein als 50 Sek. Es darf kein brennendes Abtropfen, vollständiges Abbrennen oder ein Nachglühen von länger als 30 Sek. erfolgen. Die Einstufung in die Brandklasse UL 94 V1 erfordert, daß die Nachbrennzeiten nicht länger als 30 Sek. sind und daß die Summe der Nachbrennzeiten von 10 Beflammungen von 5 Proben nicht größer als 250 Sek. ist. Das Nachglühen darf nicht länger als 60 Sek. dauern. Die übrigen Kriterien sind identisch mit den oben erwähnten. Eine Einstufung in die Brandklasse UL 94 V2 erfolgt dann, wenn es bei Erfüllung der übrigen Kriterien zur Einstufung UL 94 V1 zu brennendem Abtropfen kommt.

Weitere Prüfungen erfolgten an bei 220°C gepreßten Probekörpern, im Einzelnen:

2. Wärmeformbeständigkeit nach Vicat in [°C] (DIN 53460/B)

3. Lochkerbschlagzähigkeit, $a_{kl}$, in [kJ/m$^2$] an gepreßten Normkleinstäbchen (DIN 53453)

4. Schmelzflußindex, MFI, in [g/10 min] bei 200°C mit 5 kp (DIN 53735)

Zur Herstellung erfindungsgemäßer Formmassen und von Vergleichsproben wurden folgende Produkte verwendet:

Komponente A

Als Vertreter der Komponente A wurde ein schlagfestes Polystyrol mit 8 Gew.% Polybutadienkautschuk eingesetzt. Die Viskositätszahl des Matrixstyrols, bestimmt analog DIN 53726 an 0,5 %igen Lösungen in Toluol bei 23°C, betrug 70 ml/g (mittlere Teilchengroße 2,7 $\mu$m).

Komponente B

Als Vertreter der Komponente B wurde ein Poly-(2,6-dimethyl-1,4-phenylen)ether mit einer Grenzviskosität von 0,5 dl/g, gemessen in Chloroform bei 30°C, verwendet.

Komponente C

$C_1$ Triphenylphosphinoxid und

$C_2$ Melamin, in den in der Tabelle genannten Gew.-Verhältnissen.

$C_3$ eine Mischung aus Triphenylphosphinoxid und Trixylylphosphat im Gewichtsverhältnis 70/30 gemäß der Lehre von Bsp. 2 bzw. 6 der DE-OS-32 34 033.

Komponente D

$D_1$ Titandioxid:RLL-Kronos Titan Gesellschaft; mittlere Teilchengröße 220 - 230 nm

$D_2$ Ruß Degussa Ruß FW18 15 nm

Die Erfindung wird durch die nachfolgenden Beispiele näher erläutert. Die in den Beispielen genannten Teile und Prozente beziehen sich, sofern nicht anders angegeben, auf das Gewicht.

Beispiele 1 bis 3 und Vergleichsversuche I bis V

Die in der Tabelle 1 angegebenen Gewichtsteile an schlagfestem Polystyrol [A], Poly-(2,6-dimethyl-1,4-phenylen)-ether) [B] und an Flammschutzmitteln $C_1$ und $C_2$ sowie den Zusatzstoffen [D] wurden auf einem Zweiwellenextruder bei 250°C geschmolzen, homogenisiert, gemischt und granuliert. Von dem Granulat wurden Teststäbchen für die Brandschutzprüfung und Probekörper hergestellt und daran die in Tabelle 2 genannten Messungen durchgeführt. Zum Vergleich sind Formkörper nach der Lehre der JA-OS 52 041 667 mit Melamin (vgl. Versuch V) bzw. mit einer Mischung zweier Phosphorverbindungen nach der Lehre der DE-OS 32 34 033 flammfest ausgerüstet worden (vgl. Versuche II bis IV). Versuch I belegt, daß das Flammschutzmittelsystem außerhalb der beanspruchten Obergrenze und des beanspruchten Gewichtsverhältnisses Formmassen mit schlechten mechanischen Eigenschaften liefert.

**Tabelle 1**

| Beispiel | Komponente A Teile | Komponente B Teile | Komponente C Art/Teile | | Komponente C Art/Teile | | Komponente D Art/Teile | |
|---|---|---|---|---|---|---|---|---|
| 1 | 70 | 30 | $C_1$ | 12 | $C_2$ | 1 | – | |
| 2 | 70 | 30 | $C_1$ | 14 | $C_2$ | 1,5 | $D_1$ | 1,8 |
| 3 | 70 | 30 | $C_1$ | 14 | $C_2$ | 1,5 | $D_2$ | 0,8 |
| Vergleichsversuche | | | | | | | | |
| I | 70 | 30 | $C_1$ | 11 | $C_2$ | 10 | – | |
| II | 70 | 30 | $C_3$ | 10 | – | – | – | |
| III | 70 | 30 | $C_3$ | 10 | – | – | $D_2$ | 0,8 |
| IV | 70 | 30 | $C_3$ | 15,5 | – | – | $D_2$ | 0,8 |
| V | 70 | 30 | – | | $C_2$ | 10 | – | |

Tabelle 2

| Beispiel | Vicat [°C] | MFI | $a_{KL}$ | Brandverhalten UL 94 | nicht brennendes Abtropfen |
|---|---|---|---|---|---|
| 1 | 90 | 1,5 | 16,4 | V-0 | nein |
| 2 | 84 | 2,5 | 13,4 | V-0 | nein |
| 3 | 85 | 2,5 | 14,8 | V-0 | nein |
| Vergleichs-versuche | | | | | |
| I | 91 | >0,1 | 4,5 | V-0 | nein |
| II | 109 | 0,9 | 12,4 | V-0 | ja |
| III | 108 | 1,0 | 12,2 | V-2 | - |
| IV | 82 | 2,8 | 15,2 | V-2 | - |
| V | 119,2 | >0,1 | 3,9 | HB* | - |

* brennt

**Patentansprüche**

1. Selbstverlöschende, halogenfreie thermoplastische Formmasse, enthaltend, bezogen auf A + B,

A 40 bis 80 Gew.% mindestens eines, gegebenenfalls schlagfest modifizierten Polymerisats, aufgebaut aus einem vinylaromatischen Monomeren mit 8 bis 12 C-Atomen,

B 60 bis 20 Gew.% mindestens eines Polyphenylenethers, enthaltend zusätzlich,

C ein Flammschutzmittelsystem auf Basis von 2 unterschiedlichen Flammschutzmitteln,

dadurch gekennzeichnet, daß bezogen auf 100 Gew.Teile A + B,

5 bis 25 Gew.Teile des Flammschutzmittelsystems angewendet werden und dieses eine Mischung aus

$C_1$ mindestens einer Phosphor enthaltenden organischen Verbindung und

$C_2$ mindestens einem Triazinderivat

im Gewichtsverhältnis $C_1/C_2$ von 20:1 bis 2:1 darstellt.

**2.** Selbstverlöschende, halogenfreie thermoplastische Formmasse nach Anspruch 1, enthaltend, bezogen auf A + B,

A 50 bis 75 Gew.% mindestens eines, gegebenenfalls schlagfest modifizierten Polymerisats, aufgebaut aus einem vinylaromatischen Monomeren mit 8 bis 12 C-Atomen,

B 50 bis 25 Gew.% mindestens eines Polyphenylenethers, enthaltend zusätzlich,

C ein Flammschutzmittelsystem auf Basis von 2 unterschiedlichen Flammschutzmitteln,

dadurch gekennzeichnet, daß bezogen auf 100 Gew.Teile A + B,

10 bis 25 Gew.Teile des Flammschutzmittelsystems angewendet werden und dieses eine Mischung aus

$C_1$ mindestens einer Phosphor enthaltenden organischen Verbindung und

$C_2$ mindestens einem Triazinderivat

im Gewichtsverhältnis $C_1/C_2$ von 18:1 bis 5:1 darstellt.

**3.** Selbstverlöschende, halogenfreie thermoplastische Formmasse nach Anspruch 1 oder 2, enthaltend, bezogen auf A + B,

A 60 bis 72 Gew.% schlagfestes Polystyrol,

B 50 bis 25 Gew.% mindestens eines Polyphenylenethers, enthaltend zusätzlich,

C ein Flammschutzmittelsystem auf Basis von 2 unterschiedlichen Flammschutzmitteln,

dadurch gekennzeichnet, daß bezogen auf 100 Gew.Teile A + B,

12 bis 23 Gew.Teile des Flammschutzmittelsystems angewendet werden und dieses eine Mischung aus

$C_1$ Triphenylphosphinoxid

und

$C_2$ Melamin

im Gewichtsverhältnis $C_1/C_2$ von 18:1 bis 5:1 darstellt.

**4.** Formmasse nach Ansprüchen 1 bis 3, dadurch gekennzeichnet, daß sie außerdem übliche Zusatzstoffe (Komponente D) aufweist.

**5.** Verfahren zur Herstellung einer Formmasse gemäß Ansprüchen 1 bis 4 durch übliches Mischen der Komponenten der Formmasse.

**6.** Verwendung der Formmasse gemäß Ansprüchen 1 bis 4 zur Herstellung von Formteilen.

**Claims**

**1.** A self-extinguishing, halogen-free thermoplastic molding material containing, based on A + B,

A from 40 to 80 % by weight of at least one polymer which may be toughened and comprises a vinylaromatic monomer of 8 to 12 carbon atoms, and

B from 60 to 20 % by weight of at least one polyphenylene ether and additionally containing

C a flameproofing system based on 2 different flameproofing agents,

wherein

from 5 to 25 parts by weight, based on 100 parts by weight of A + B, of the flameproofing system are used and said system is a mixture of

$C_1$ at least one phosphorus-containing organic compound and

$C_2$ at least one triazine derivative

in a weight ratio $C_1/C_2$ of from 20:1 to 2:1.

**2.** A self-extinguishing, halogen-free thermoplastic molding material as claimed in claim 1 containing, based on A + B,

A from 50 to 75 % by weight of at least one polymer which may be toughened and comprises a vinylaromatic monomer of 8 to 12 carbon atoms, and

B from 50 to 25 % by weight of at least one polyphenylene ether and additionally containing

C a flameproofing system based on 2 different flameproofing agents,

wherein

from 10 to 25 parts by weight, based on 100 parts by weight of A + B, of the flameproofing system are

8

used and said system is a mixture of
$C_1$ at least one phosphorus-containing organic compound and
$C_2$ at least one triazine derivative
in a weight ratio $C_1/C_2$ of from 18:1 to 5:1.

3. Self-extinguishing, halogen-free thermoplastic molding material as claimed in claim 1 or 2, containing, based on A + B,
A from 60 to 72 % by weight of high impact polystyrene and
B from 50 to 25 % by weight of at least one polyphenylene ether, and additionally containing
C a flameproofing system based on 2 different flameproofing agents,
wherein
from 12 to 23 parts by weight, based on 100 parts by weight of A + B, of the flameproofing system are used and said system is a mixture of
$C_1$ triphenylphospine oxide
and
$C_2$ melamine
in a weight ratio $C_1/C_2$ of from 18:1 to 5:1.

4. A molding material as claimed in any one of claims 1 to 3, which additionally contains conventional additives (component D).

5. A process for the preparation of molding material as claimed in any one of claims 1 to 4 by conventional mixing of the components of the molding material.

6. Use of a molding material as claimed in any one of claims 1 to 4 for the production of moldings.

**Revendications**

1. Matière à mouler thermoplastique auto-extinctrice exempte d'halogène, contenant, rapportés à A + B,
A de 40 à 80% en poids d'au moins un polymère éventuellement modifié pour le rendre résistant aux chocs, à base d'un monomère vinylaromatique contenant de 8 à 12 atomes de carbone,
B de 60 à 20% en poids d'au moins un éther de polyphénylène,
contenant, en outre,
C un système d'agents ignifuges à base de 2 agents ignifuges différents,
caractérisée en ce que, rapportées à 100 parties en poids de A + B,
on utilise de 5 à 25 parties en poids du système d'agents ignifuges, et celui-ci représente un mélange de
$C_1$ au moins un composé organique contenant du phosphore et
$C_2$ au moins un dérivé de triazine
dans un rapport pondéral $C_1/C_2$ de 20:1 à 2:1.

2. Matière à mouler thermoplastique auto-extinctrice exempte d'halogène selon la revendication 1, contenant, rapportés à A + B,
A de 50 à 75% en poids d'au moins un polymère éventuellement modifié pour le rendre résistant aux chocs, à base d'un monomère vinylaromatique contenant de 8 à 12 atomes de carbone,
B de 50 à 25% en poids d'au moins un éther de polyphénylène,
contenant, en outre,
C un système d'agents ignifuges à base de 2 agents ignifuges différents,
caractérisée en ce que, rapportées à 100 parties en poids de A + B,
on utilise de 10 à 25 parties en poids du système d'agents ignifuges, et celui-ci représente un mélange de
$C_1$ au moins un composé organique contenant du phosphore et
$C_2$ au moins un dérivé de triazine
dans un rapport pondéral $C_1/C_2$ de 18:1 à 5:1.

3. Matière à mouler thermoplastique auto-extinctrice exempte d'halogène selon la revendication 1 ou 2, contenant, rapportés à A + B,
A de 60 à 72% en poids d'un polystyrène résistant aux chocs,

B de 50 à 25% en poids d'au moins un éther de polyphénylène,
contenant, en outre,
 C un système d'agents ignifuges à base de 2 agents ignifuges différents,
caractérisée en ce que, rapportées à 100 parties en poids de A + B,
on utilise de 12 à 23 parties en poids du système d'agents ignifuges, et celui-ci représente un mélange de
$C_1$ oxyde de triphénylphosphine et
$C_2$ mélamine
dans un rapport pondéral $C_1/C_2$ de 18:1 à 5:1.

4. Matière à mouler selon les revendications 1 à 3, caractérisée en ce qu'elle présente, en outre, des additifs habituels (composant D).

5. Procédé pour la préparation d'une matière à mouler selon les revendications 1 à 4, par mélange habituel des composants de la matière à mouler.

6. Utilisation de la matière à mouler selon les revendications 1 à 4 pour la fabrication d'éléments moulés.